# FASCICULE DE BREVET EUROPEEN

(11) **EP 4 025 473 B1**
(45) Date de publication et mention de la délivrance du brevet: **17.12.2025**
(21) Numéro de dépôt: 20764089.7
(22) Date de dépôt: 01.09.2020
(51) Int. Cl.: B61F 19/06

(54) **DISPOSITIF DE PROTECTION POUR VÉHICULE FERROVIAIRE**
SCHUTZVORRICHTUNG FÜR SCHIENENFAHRZEUG
PROTECTIVE DEVICE FOR RAIL VEHICLE

(30) Priorité: 03.09.2019 FR 1909664
(43) Date de publication de la demande: 13.07.2022
(73) Titulaire: ALSTOM Holdings, 93400 Saint-Ouen-sur-Seine (FR)
(72) Inventeur: AYME, Nicolas, 17220 Sainte Soulle (FR); LABASQUE, Damien, 17540 Nuaille d'Aunis (FR)
(74) Mandataire: Plasseraud IP
(86) Numéro de dépôt international: PCT/EP2020/074311
(87) Numéro de publication internationale: WO 2021/043752

(56) Documents cités:
- EP-A1- 3 018 023
- US-A- 528 048
- US-A- 559 091
- US-A- 884 683

## Description

La présente invention concerne un dispositif de protection pour véhicule ferroviaire, propre à être fixé sous une partie avant d'une caisse dudit véhicule ferroviaire, ledit dispositif de protection comportant un volet propre à être monté mobile en rotation par rapport à ladite caisse selon un premier axe sensiblement perpendiculaire au sens de déplacement du véhicule.

Il est connu d'équiper les véhicules ferroviaires, notamment de type tramways, de dispositifs de protection en cas de heurt avec un obstacle se trouvant sur la voie. En particulier, dans le cas où l'obstacle est un piéton étendu au sol, le dispositif de protection a pour but d'empêcher les roues du bogie de blesser le piéton. Un véhicule ferroviaire équipé d'un tel dispositif de protection est notamment décrit dans les documents EP3018023, US559091 et US884683.

Cependant, les dispositifs de protection connus présentent des inconvénients. En particulier, le volet du dispositif décrit dans le document EP3018023 (figure 2) est écarté du sol, de sorte qu'un membre d'un piéton, tel qu'un bras ou une jambe, peut passer sous ledit volet et se trouver en contact avec les roues du bogie.

Afin de résoudre ces problèmes, l'invention a pour objet un dispositif de protection selon la revendication 1.

Suivant d'autres aspects avantageux de l'invention, le dispositif de protection comporte l'une ou plusieurs des caractéristiques suivantes, prises isolément ou suivant toutes les combinaisons techniquement possibles :
- l'écrou assemblé au filetage de la seconde extrémité de la première tige est apte à être déplacé le long de la première tige de sorte à régler la distance maximale entre la partie avant de la caisse et le deuxième bord du volet en configuration déployée ;
- le dispositif de protection comprend au moins une roulette mobile en rotation par rapport au volet ;
- le dispositif de protection comprend une plaque en matériau élastomère fixée au volet, l'au moins une roulette étant montée en rotation sur ladite plaque ;
- le deuxième bord du volet comporte un barreau propre à être disposé devant l'au moins une roulette selon le sens de déplacement dudit véhicule ;
- le dispositif de protection comprend en outre un deuxième organe d'assemblage, comportant : un deuxième support propre à être monté solidairement de la partie avant de la caisse, le volet étant monté en rotation sur ledit deuxième support selon le premier axe ; une deuxième tige sensiblement perpendiculaire au premier axe, comprenant : une première extrémité articulée au volet selon le deuxième axe de rotation ; et une seconde extrémité apte à coulisser par rapport au deuxième support ; et un deuxième élément de rappel élastique, propre à exercer un effort de rappel s'opposant au déplacement du volet vers le deuxième support ;
- le deuxième bord du volet comporte une zone centrale, disposée entre les premières extrémités des première et deuxième tiges ;
- le dispositif de protection comprend en outre une enveloppe formée d'un matériau électriquement isolant, ladite enveloppe étant disposée autour de la zone centrale du deuxième bord du volet ;
- le dispositif de protection comprend deux roulettes disposées de part et d'autre de la zone centrale, chacune desdites roulettes étant mobile en rotation par rapport au volet.

L'invention sera mieux comprise à la lecture de la description qui va suivre, donnée uniquement à titre d'exemple non limitatif et faite en se référant aux dessins sur lesquels :
- [Fig 1] la figure 1 est une représentation schématique d'un véhicule ferroviaire selon un mode de réalisation de l'invention, comprenant un dispositif de protection ;
- [Fig 2] la figure 2 est une vue en perspective du dispositif de protection de la figure 1 dans une première configuration ;
- [Fig 3] la figure 3 est une vue de détail du véhicule de la figure 1 avec le dispositif de protection dans la première configuration ; et
- [Fig 4] la figure 4 est une vue de détail du véhicule de la figure 1 avec le dispositif de protection dans une deuxième configuration.

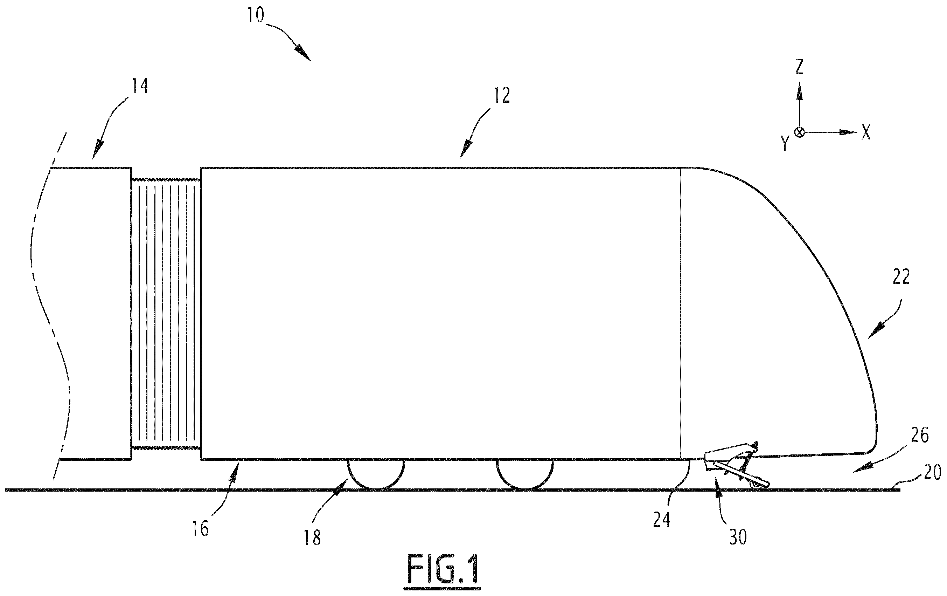

La figure 1 montre un véhicule ferroviaire 10 selon un mode de réalisation de l'invention. Le véhicule ferroviaire 10, par exemple de type tramway, comporte au moins une voiture de tête 12 et de préférence au moins une voiture passager 14, reliée à ladite voiture de tête.

La voiture de tête 12 comporte une caisse 16 et au moins un bogie 18 disposé sous ladite caisse.

Dans la suite de la description, on considère une base orthonormée (X, Y, Z), la direction Z représentant la verticale.

Le véhicule ferroviaire 10 est destiné à se déplacer sur des rails 20, selon une direction de déplacement parallèle à la direction X.

La caisse 16 comporte une partie avant 22, formant saillie par rapport au bogie 18 selon un sens de déplacement de la voiture de tête 12. Dans la suite de la description, les termes « avant » et « arrière » s'entendent par rapport à la direction X.

La partie avant 22 de la caisse 16 comporte une surface inférieure 24, formant une extrémité basse de ladite partie avant selon la direction Z. Un espace inférieur 26 est ménagé entre ladite surface inférieure 24 et une extrémité inférieure du bogie 18, selon la verticale Z.

La voiture de tête 12 comporte en outre un dispositif 30 de protection, disposé dans l'espace inférieur 26. Ledit dispositif 30 est destiné à empêcher le bogie 18 de rouler sur un obstacle se trouvant sur les rails 20.

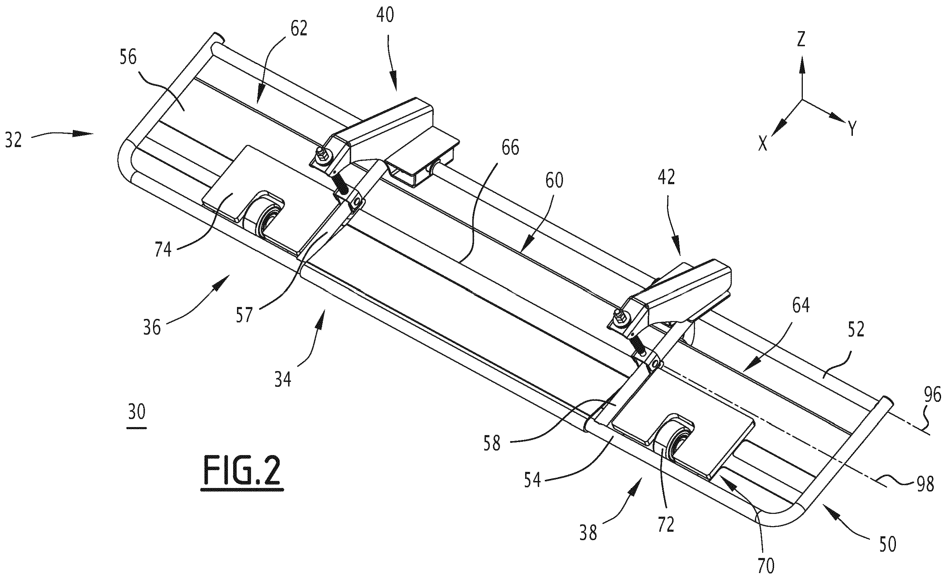

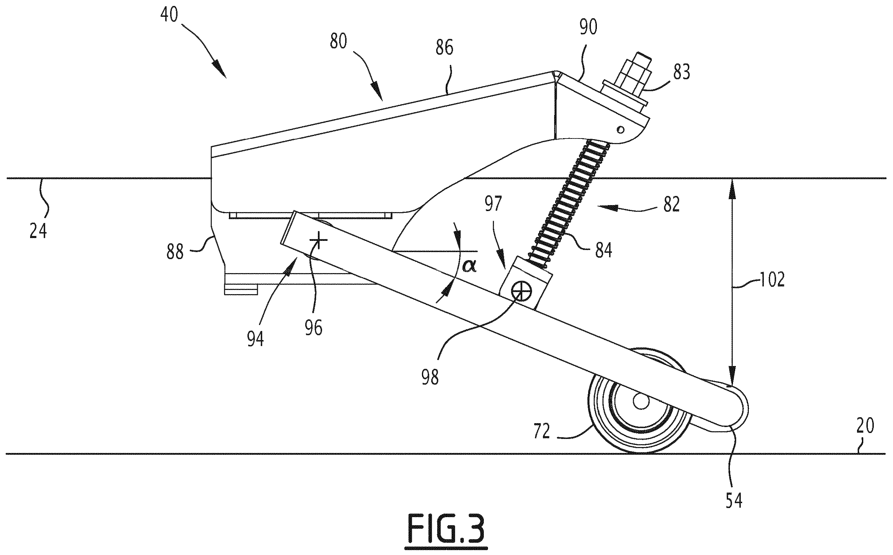

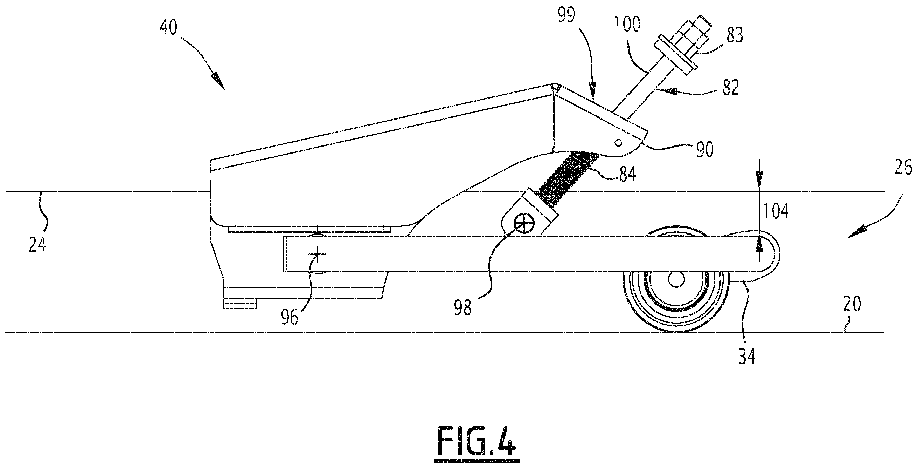

Le dispositif de protection 30 est représenté seul à la figure 2 et également visible aux figures 3 et 4. Le dispositif de protection 30 comporte un volet 32, une enveloppe 34 isolante, un premier 36 et un deuxième 38 organes rotatifs et un premier 40 et un deuxième 42 organes d'assemblage.

Le volet 32 présente une forme sensiblement plane, délimitée par un cadre 50 de forme sensiblement rectangulaire. Ledit cadre 50 comporte notamment un premier 52 et un deuxième 54 barreaux, chacun desdits barreaux s'étendant selon la direction Y. Les premier 52 et deuxième 54 barreaux forment deux bords opposés du cadre 50.

De préférence, le cadre 50 est entièrement réalisé à partir de barreaux, notamment métalliques. Préférentiellement, au moins certains desdits barreaux présentent une section circulaire.

Le volet 32 comporte en outre un ou plusieurs panneaux 56 de remplissage, fixés au cadre 50 et propres à obstruer au moins partiellement un espace intérieur dudit cadre.

Le volet 32 comporte en outre une première 57 et une deuxième 58 barres intermédiaires, situées à l'intérieur du cadre et reliant les premier 52 et deuxième 54 barreaux. Lesdites barres intermédiaires 57, 58 s'étendent perpendiculairement à Y.

Le volet 32 comporte ainsi une zone centrale 60, disposée entre les barres intermédiaires 57, 58, et une première 62 et une deuxième 64 zones latérales situées de part et d'autre de ladite zone centrale selon la direction Y.

L'enveloppe 34 est formée d'un matériau électriquement isolant, par exemple une membrane de caoutchouc, et entoure le deuxième barreau 54 du cadre au niveau de la zone centrale 60. L'enveloppe 34 comporte par exemple deux extrémités 66 refermées l'une sur l'autre et fixées à un panneau 56 de remplissage.

Le premier 36 et le deuxième 38 organes rotatifs sont respectivement disposés au niveau de la première 62 et de la deuxième 64 zones latérales, à l'intérieur du cadre 50. Les premier 36 et deuxième 38 organes rotatifs sont sensiblement identiques et seront décrits simultanément ci-après.

L'organe rotatif 36, 38 comporte une plaque 70 et une roulette 72. La plaque 70 est formée d'un matériau apte à absorber les vibrations mécaniques, notamment un matériau de type élastomère. Ladite plaque 70 est disposée à l'intérieur du cadre 50 et fixée audit cadre et/ou à un panneau 56 de remplissage.

La plaque 70 a sensiblement une forme en C, comprenant notamment deux pattes 74 adjacentes selon Y. La roulette 72 est disposée entre les deux pattes 74 de la plaque 70 et montée en rotation sur ladite plaque, selon un axe parallèle à Y.

Dans le plan du cadre 50, la roulette 72 de l'organe rotatif 36, 38 est ainsi disposée entre les premier 52 et deuxième 54 barreaux.

Comme il sera détaillé ci-après, le premier 40 et le deuxième 42 organes d'assemblage sont respectivement disposés proches de la première 57 et de la deuxième 58 barres intermédiaires du volet 32. Les premier 40 et deuxième 42 organes d'assemblage sont sensiblement identiques et seront décrits simultanément ci-après, à l'appui des figures 3 et 4.

L'organe d'assemblage 40, 42 comprend un support 80, une tige 82, un écrou 83 et un élément de rappel élastique, tel qu'un ressort 84.

Le support 80 comporte une portion de fixation 86, une portion d'articulation 88 et une portion de coulissement 90.

La portion de fixation 86 est fixée à la surface inférieure 24 de la partie avant 22 de la caisse 16 de la voiture de tête 12.

La portion d'articulation 88 comporte une tubulure interne 94 dans laquelle est inséré le premier barreau 52 du cadre. Les supports 80 des premier 40 et deuxième 42 organes d'assemblage, ainsi que ledit premier barreau 52, matérialisent un premier axe 96 de rotation du volet 32 par rapport à la caisse 16. Ledit premier axe de rotation 96 est parallèle à Y et disposé sous la surface inférieure 24 de ladite caisse.

La portion de coulissement 90, située en avant par rapport à l'axe de rotation 96, comporte une ouverture traversante 99.

La tige 82 est sensiblement rectiligne et s'étend sensiblement dans un plan (X, Z). Une première extrémité 97 de ladite tige est articulée au volet 32, selon un deuxième axe 98 de rotation, parallèle à Y et situé en avant du premier axe de rotation 96.

Plus particulièrement, la première extrémité de la tige 82 du premier 40 et du deuxième 42 organes d'assemblage est articulée respectivement sur la première 57 et sur la deuxième 58 barre intermédiaire du volet 32. Les premières extrémités des deux tiges 82 sont disposées sur le même deuxième axe 98 de rotation.

Une deuxième extrémité de la tige 82 est apte à coulisser dans l'ouverture traversante 99 ménagée dans la portion de coulissement 90 du support 80. Ladite deuxième extrémité de la tige 82 comporte un filetage 100 auquel est assemblé l'écrou 83. Ledit écrou 83 forme ainsi une butée axiale, de sorte à bloquer ladite tige dans l'ouverture traversante 99.

Le ressort 84 est un ressort de compression, de préférence un ressort hélicoïdal. Le ressort 84 est disposé autour de la tige 82, entre la première extrémité 97 et la portion de coulissement 90 du support 80.

Les premier 40 et deuxième 42 organes d'assemblage permettent au volet 32 de pivoter par rapport à la caisse 16 entre une première et une deuxième configurations angulaires extrêmes, représentées respectivement aux figures 3 et 4.

Dans chacune des première et deuxième configurations, le deuxième barreau 54 du cadre 50 est disposé en avant par rapport au premier barreau 52, selon la direction X. Par ailleurs, les roulettes 72 sont en saillie verticale sous le cadre 50. Le deuxième barreau 54 est disposé devant lesdites roulettes 72.

Dans la première configuration dite déployée, visible à la figure 3, le deuxième barreau 54 présente une distance verticale maximale 102 par rapport à la surface inférieure 24 de la caisse 16. Pour chaque organe d'assemblage 40, 42, le ressort 84 est dans un état de compression minimal et l'écrou 83 vient en butée contre la portion de coulissement 90 du support 80, selon l'axe de la tige 82.

Dans la deuxième configuration dite rétractée, visible à la figure 4, le deuxième barreau 54 présente une distance verticale minimale 104 par rapport à la surface inférieure 24 de la caisse 16. Pour chaque organe d'assemblage 40, 42, le ressort 84 est dans un état de compression maximal et l'écrou 83 est écarté de la portion de coulissement 90 du support 80. De préférence, le ressort 84 est configuré pour que la distance verticale minimale 104 soit non nulle.

Un réglage d'une position de l'écrou 83 le long de la tige 82 de chaque organe d'assemblage 40, 42 permet de régler un angle α du volet 32 par rapport à l'horizontale dans la configuration déployée. De préférence, l'angle α est compris entre 30° et 60° et plus préférentiellement proche de 45°.

En particulier, selon un premier mode de réalisation, l'écrou 83 est positionné sur la tige 82 de sorte que dans la configuration déployée, une extrémité inférieure des roulettes 72 soit disposée plus bas que l'extrémité inférieure du bogie 18, selon la verticale Z. Comme représenté sur la figure 3, les roulettes 72 sont ainsi destinées à être en contact avec le sol pendant l'essentiel du déplacement du véhicule ferroviaire 10.

L'utilisation du ressort 84 de compression permet notamment de garantir que les roulettes restent en contact avec le sol et que le volet reste au plus près du sol même en cas de modification du relief de la voie et de la présence d'un creux au niveau du sol/ de la voie.

Au contraire, selon un deuxième mode de réalisation, l'écrou 83 est réglé sur la tige 82 de sorte que dans la configuration déployée, une extrémité inférieure des roulettes 72 soit disposée plus haut que l'extrémité inférieure du bogie 18, selon la verticale Z. Un jeu nominal (non représenté) est ainsi ménagé verticalement entre le volet 32 et les rails 20.

Dans ce deuxième cas, il est cependant souhaitable que le jeu nominal soit suffisamment faible pour empêcher un membre d'un piéton situé sur les rails 20 de passer sous le volet 32.

De manière optionnelle, la voiture de tête 12 comporte en outre un dispositif électronique (non représenté) pour la détection d'obstacle et le déclenchement d'un freinage d'urgence, comme décrit par exemple dans le document EP3018023.

Un procédé de fonctionnement du véhicule ferroviaire décrit ci-dessus va à présent être décrit.

La voiture de tête 12 du véhicule 10 circule sur les rails 20 dans son sens habituel de déplacement. Le volet 32 du dispositif de protection 30 est disposé dans l'espace inférieur 26 sous la partie avant 22 de la caisse 16. Le deuxième barreau 54 dudit volet forme ainsi l'avant de la voiture de tête 12 au niveau dudit espace inférieur 26.

En cas d'obstacle situé sur ou entre les rails 20, le deuxième barreau 54 est le premier élément à entrer en contact avec ledit obstacle. La faible distance verticale entre ledit deuxième barreau 54 et le sol permet au volet 32 de s'engager sous ledit obstacle, de sorte à empêcher ledit obstacle de passer sous le bogie 18. En particulier, le deuxième barreau 54 situé devant les roulettes 72 empêche lesdites roulettes de rouler sur l'obstacle.

La rotation du volet 32 autour du premier axe 96 par rapport à la caisse 16 permet audit volet de s'adapter à la configuration des rails 20 sur le trajet du véhicule ferroviaire 10, et notamment à des variations de la distance entre lesdits rails et la surface inférieure 24 de la partie avant 22 de la caisse.

Selon le premier mode de réalisation précédemment décrit, les roulettes 72 sont en contact avec les rails 20 ou le sol pendant l'essentiel du déplacement du véhicule ferroviaire 10, le volet 32 pivotant entre les configurations déployée et rétractée. Les plaques 70 en élastomère des premier 36 et deuxième 38 organes rotatifs permettent de diminuer le niveau de bruit généré par les roulettes.

Dans le cas d'un système de tramway avec un rail d'alimentation électrique par le sol (non représenté) disposé entre les rails 20, l'enveloppe 34 isolante permet d'isoler électriquement le volet 32 dudit rail d'alimentation.

Selon le deuxième mode de réalisation précédemment décrit, les roulettes 72 peuvent être verticalement à distance des rails 20 ou du sol pendant une partie du déplacement du véhicule ferroviaire 10, le volet 32 étant en configuration déployée. Lorsqu'une distance entre le sol et la partie avant 22 de la caisse diminue, les roulettes 72 touchent le sol et le volet 32 pivote éventuellement vers la configuration rétractée. Un tel réglage du dispositif 30 permet notamment de diminuer le niveau de bruit lié à la rotation des roulettes 72.

## Revendications

1. Dispositif de protection (30) pour véhicule ferroviaire (10), propre à être fixé sous une partie avant (22) d'une caisse dudit véhicule ferroviaire, ledit dispositif de protection comportant :
- un volet (32) propre à être monté mobile en rotation par rapport à ladite caisse selon un premier axe (96) sensiblement perpendiculaire au sens de déplacement du véhicule ;
le dispositif de protection comprenant au moins un premier organe d'assemblage (40), ledit premier organe d'assemblage comportant :
- un premier support (80) propre à être monté solidairement de la partie avant (22) de la caisse, le volet étant monté en rotation (52, 94) sur ledit premier support selon le premier axe ;
- une première tige (82) sensiblement perpendiculaire au premier axe, comprenant : une première extrémité (97) articulée au volet selon un deuxième axe (98) de rotation, sensiblement parallèle au premier axe ; et une seconde extrémité apte à coulisser par rapport au premier support (80, 90) ; et
- un premier élément de rappel élastique (84), propre à exercer un effort de rappel s'opposant au déplacement du volet vers le premier support ;
le volet (32) comportant un premier (52) et un deuxième (54) bords opposés, respectivement proche et éloigné du premier axe (96), ledit volet étant apte à pivoter autour dudit premier axe entre une configuration déployée et une configuration rétractée, correspondant respectivement à une distance maximale (102) et à une distance minimale (104) entre la partie avant (22) de la caisse et le deuxième bord (54) du volet, le premier élément de rappel élastique (84) tendant à ramener le volet dans la configuration déployée ;
le premier organe d'assemblage (40) comportant en outre un écrou (83) assemblé à un filetage (100) de la seconde extrémité de la première tige, ledit écrou étant en butée contre le premier support (80, 90) dans la configuration déployée et à l'écart dudit premier support dans la configuration rétractée.

2. Dispositif selon la revendication 1, dans lequel l'écrou (83) est apte à être déplacé le long de la première tige (82) de sorte à régler la distance maximale (102) entre la partie avant (22) de la caisse et le deuxième bord (54) du volet en configuration déployée.

3. Dispositif selon l'une des revendications 1 ou 2, comprenant au moins une roulette (72) mobile en rotation par rapport audit volet.

4. Dispositif selon la revendication 3, comprenant une plaque (70) en matériau élastomère fixée au volet, l'au moins une roulette (72) étant montée en rotation sur ladite plaque

5. Dispositif selon l'une des revendications 3 ou 4, dans lequel le deuxième bord du volet comporte un barreau (54) propre à être disposé devant l'au moins une roulette (72) selon le sens de déplacement dudit véhicule.

6. Dispositif selon l'une des revendications précédentes, comprenant en outre un deuxième organe d'assemblage (42), comportant :
- un deuxième support (80) propre à être monté solidairement de la partie avant (22) de la caisse, le volet étant monté en rotation (52, 94) sur ledit deuxième support selon le premier axe ;
- une deuxième tige (82) sensiblement perpendiculaire au premier axe, comprenant :
une première extrémité (97) articulée au volet selon le deuxième axe (98) de rotation ;
et une seconde extrémité apte à coulisser par rapport au deuxième support (80, 90) ; et
- un deuxième élément de rappel élastique (84), propre à exercer un effort de rappel s'opposant au déplacement du volet vers le deuxième support.

7. Dispositif selon la revendication 6, dans lequel le deuxième bord (54) du volet comporte une zone centrale (60), disposée entre les premières extrémités (97) des première et deuxième tiges.

8. Dispositif selon la revendication 7, comprenant en outre une enveloppe (34) formée d'un matériau électriquement isolant, ladite enveloppe étant disposée autour de la zone centrale (60) du deuxième bord du volet.

9. Véhicule ferroviaire (10, 12) comprenant une caisse (16) et au moins un bogie (18) disposé sous ladite caisse, la caisse comprenant une partie avant (22) formant saillie par rapport au bogie selon un sens (X) de déplacement dudit véhicule, le véhicule ferroviaire comprenant en outre, fixé sous la partie avant (22), un dispositif de protection (30) selon l'une des revendications précédentes.

## Patentansprüche

1. Schutzvorrichtung (30) für ein Schienenfahrzeug (10), die an einem vorderen Teil (22) einer Karosserie des Schienenfahrzeugs befestigt werden kann, wobei die Schutzvorrichtung umfasst:
- eine Klappe (32), die in Bezug auf die Karosserie um eine erste Achse (96), die im Wesentlichen senkrecht zur Fahrtrichtung des Fahrzeugs verläuft, drehbar angebracht werden kann;
wobei die Schutzvorrichtung wenigstens ein erstes Verbindungselement (40) umfasst, wobei das erste Verbindungselement umfasst:
- ein erster Träger (80), der fest mit dem vorderen Teil (22) der Karosserie verbunden werden kann, wobei die Klappe drehbar (52, 94) an dem ersten Träger entlang der ersten Achse angebracht ist;
- eine erste Stange (82), die im Wesentlichen senkrecht zur ersten Achse steht und umfasst: ein erstes Ende (97), das an der Klappe entlang einer zweiten Drehachse (98) angelenkt ist, die im Wesentlichen parallel zur ersten Achse verläuft; und ein zweites Ende, das in Bezug auf den erstev Träger (80, 90) verschiebbar ist; und
- ein erstes elastisches Rückstellelement (84), das eine Rückstellkraft ausüben kann, die der Bewegung der Klappe in Richtung des ersten Trägers entgegenwirkt;
wobei die Klappe (32) eine erste (52) und eine zweite (54) gegenüberliegende Kante aufweist, die jeweils nahe und entfernt von der ersten Achse (96) liegen, wobei die Klappe um die erste Achse zwischen einer ausgefahrenen Konfiguration und einer eingefahrenen Konfiguration schwenkbar ist, die jeweils einem maximalen Abstand (102) und einem minimalen Abstand (104) zwischen dem vorderen Teil (22) der Karosserie und der zweiten Kante (54) der Klappe entsprechen, wobei das erste elastische Rückstellelement (84) dazu neigt, die Klappe in die ausgefahrene Konfiguration zurückzubringen;
wobei das erste Verbindungselement (40) ferner eine Mutter (83) umfasst, die mit einem Gewinde (100) am zweiten Ende der ersten Stange verbunden ist, wobei die Mutter in der ausgefahrenen Position am ersten Träger (80, 90) anliegt und in der eingefahrenen Position von dem ersten Träger entfernt ist.

2. Vorrichtung nach Anspruch 1, wobei die Mutter (83) entlang der ersten Stange (82) verschoben werden kann, um den maximalen Abstand (102) zwischen dem vorderen Teil (22) der Karosserie und der zweiten Kante (54) der Klappe in der ausgefahrenen Konfiguration einzustellen.

3. Vorrichtung nach einem der Ansprüche 1 oder 2, die wenigstens ein Rad (72) umfasst, das relativ zu der Klappe drehbar ist.

4. Vorrichtung nach Anspruch 3, die eine Platte (70) aus elastomerem Material umfasst, die an der Klappe befestigt ist, wobei das wenigstens eine Rad (72) drehbar auf der Platte angebracht ist.

5. Vorrichtung nach einem der Ansprüche 3 oder 4, wobei die zweite Kante der Klappe eine Stange (54) aufweist, die in Bewegungsrichtung des Fahrzeugs vor dem wenigstens einen Rad (72) angeordnet werden kann.

6. Vorrichtung nach einem der vorhergehenden Ansprüche, die ferner ein zweites Verbindungselement (42) aufweist, umfassend:
- einen zweiten Träger (80), der fest mit dem vorderen Teil (22) der Karosserie verbunden werden kann, wobei die Klappe drehbar (52, 94) an demzweiten Träger entlang der ersten Achse angebracht ist;
- eine zweite Stange (82), die im Wesentlichen senkrecht zur ersten Achse steht, umfassend: ein erstes Ende (97), das an der Klappe entlang der zweiten Drehachse (98) angelenkt ist, und ein zweites Ende, das in Bezug auf den zweiten Träger (80, 90) verschiebbar ist, und
- ein zweites elastisches Rückstellelement (84), das eine Rückstellkraft ausüben kann, die der Bewegung der Klappe in Richtung des zweiten Trägers entgegenwirkt.

7. Vorrichtung nach Anspruch 6, wobei die zweite Kante (54) der Klappe einen mittleren Bereich (60) aufweist, der zwischen den ersten Enden (97) der ersten und zweiten Stangen angeordnet ist.

8. Vorrichtung nach Anspruch 7, welche ferner eine Hülle (34) aus einem elektrisch isolierenden Material umfasst, wobei die Hülle um den mittleren Bereich (60) der zweiten Kante der Klappe angeordnet ist.

9. Schienenfahrzeug (10, 12), umfassend eine Karosserie (16) und wenigstens ein unter dieser Karosserie angeordnetes Drehgestell (18), wobei die Karosserie einen vorderen Teil (22) umfasst, der in Bewegungsrichtung (X) des Fahrzeugs gegenüber dem Drehgestell hervorsteht, wobei das Schienenfahrzeug ferner unter dem vorderen Teil (22) eine Schutzvorrichtung (30) nach einem der vorhergehenden Ansprüche umfasst.

## Claims

1. Protective device (30) for a railway vehicle (10), suitable for being fastened under a front portion (22) of a body of said railway vehicle, said protective device including:
- a flap (32) suitable for being mounted movable in rotation with respect to said body along a first axis (96) substantially perpendicular to the direction of movement of the vehicle;
the protective device comprising at least a first assembly member (40), said first assembly member including:
- a first support (80) suitable for being mounted integrally with the front portion (22) of the body, the flap being mounted in rotation (52, 94) on said first support along the first axis;
- a first rod (82) substantially perpendicular to the first axis, comprising: a first end (97) articulated to the flap along a second axis (98) of rotation, substantially parallel to the first axis; and a second end capable of sliding with respect to the first support (80, 90); and
- a first elastic return element (84), suitable for exerting a return force opposing the movement of the flap towards the first support;
the flap (32) including a first (52) and second (54) opposite edges, respectively close to and distant from the first axis (96), said flap being capable of pivoting about said first axis between a deployed configuration and a retracted configuration, corresponding respectively to a maximum distance (102) and to a minimum distance (104) between the front portion (22) of the body and the second edge (54) of the flap, the first elastic return element (84) tending to return the flap to the deployed configuration;
the first assembly member (40) further including a nut (83) assembled with a thread (100) of the second end of the first rod, said nut abutting against the first support (80, 90) in the deployed configuration and being separated from the first support in the retracted configuration.

2. Device according to claim 1, wherein the nut (83) is capable of being moved along the first rod (82) so as to adjust the maximum distance (102) between the front portion (22) of the body and the second edge (54) of the flap in the deployed configuration.

3. Device according to any one of claims 1 or 2, comprising at least one wheel (72) movable in rotation with respect to said flap.

4. Device according to claim 3, comprising a plate (70) made of elastomer material fastened to the flap, the at least one wheel (72) being mounted in rotation on said plate

5. Device according to any one of claims 3 or 4, wherein the second edge of the flap includes a bar (54) suitable for being disposed in front of the at least one wheel (72) in the direction of movement of the vehicle.

6. Device according to any one of the preceding claims, further comprising a second assembly member (42), including:
- a second support (80) suitable for being mounted integrally with the front portion (22) of the body, the flap being mounted in rotation (52, 94) on said second support along the first axis;
- a second rod (82) substantially perpendicular to the first axis, comprising: a first end (97) articulated to the flap along the second axis (98) of rotation; and a second end capable of sliding with respect to the second support (80, 90); and
- a second elastic return element (84), suitable for exerting a return force opposing the movement of the flap towards the second support.

7. Device according to claim 6, wherein the second edge (54) of the flap includes a central zone (60), disposed between the first ends (97) of the first and second rods.

8. Device according to claim 7, further comprising a shell (34) formed of an electrically insulating material, said shell being disposed around the central zone (60) of the second edge of the flap.

9. Railway vehicle (10, 12) comprising a body (16) and at least one bogie (18) disposed under said body, the body comprising a front portion (22) protruding with respect to the bogie in one direction (X) of movement of the vehicle, the railway vehicle further comprising, fastened under the front portion (22), a protective device (30) according to any one of the preceding claims.
